# EUROPEAN PATENT APPLICATION

(11) **EP 3 546 647 A1**
(43) Date of publication of application: **02.10.2019**
(21) Application number: 19162116.8
(22) Date of filing: 12.03.2019
(51) Int. Cl.: E01B 7/24, E01B 19/00

(54) **SNOW REMOVER**

(30) Priority: 27.03.2018 JP 2018060561
(71) Applicant: Nabtesco Corporation, Tokyo 102-0093 (JP)
(72) Inventor: KIGAMI, Shogo, Kobe-shi, Hyogo 651-2271 (JP)
(74) Representative: Grünecker Patent- und Rechtsanwälte PartG mbB

(57) **Abstract**

A snow removal system (1) includes an ejection device (2) that ejects a fluid to remove snow from a track junction (10), an information obtainer (20B) that obtains information related to at least one of an amount of snow accumulation and an amount of snowfall around the track junction (10), and an ejection control device (20) that controls at least one of an ejection pressure, an ejection frequency, and an ejection time of the fluid ejected from the ejection device (2) in accordance with information obtained by the information obtainer (20B).

## Description

The present invention relates to a snow remover.

Tracks may include a track junction including stock rails and tongue rails. In a snowy region, an ejection device may be installed on the track junction and eject air to remove snow from between the stock rails and the tongue rails (for example, refer to Japanese Laid-Open Patent Publication No. 6-240605).

The ejection device includes a nozzle having an opening toward the distal end of the tongue rail. The ejection device ejects air compressed by a compressor from the nozzle to blow snow away from between the stock rails and the tongue rails.

Operation of the ejection device is controlled in accordance with, for example, whether or not a snowfall detection sensor detects snowfall or whether or not the track junction performs switching. There is a demand for an ejection device that operates in a more effective manner.

Accordingly, it is an objective of the present invention to provide a snow remover that effectively ejects a fluid.

To achieve the above objective and in accordance with one aspect of the present invention, a snow remover is provided that includes an ejector, an information obtainer, and a controller. The ejector ejects a fluid to remove snow from a track junction. The information obtainer obtains information related to at least one of an amount of snow accumulation and an amount of snowfall around the track junction. The controller controls at least one of an ejection pressure, an ejection frequency, and an ejection time of the fluid ejected from the ejector in accordance with information obtained by the information obtainer.

With the above configuration, the ejector is controlled based on information related to at least one of the amount of snow accumulation and the amount of snowfall around the track junction. Thus, the fluid is effectively ejected in accordance with the actual condition of the track junction.

In the snow remover described above, the controller may include a determination unit that determines whether or not movement of the track junction is in a state interfered with by snow present in the track junction. Preferably, when the determination unit determines that movement of the track junction is in a state interfered with by snow, the controller operates the ejector.

With the above configuration, when it is determined that movement of the track junction is in a state interfered with by snow, the ejector is operated. Thus, unnecessary operation of the ejector is reduced.

Preferably, in the snow remover described above, the determination unit determines whether or not movement of the track junction is in a state interfered with by snow based on at least one of a captured image of the track junction, vibration of a rail included in the track junction, an electrical conductivity of the rail, and an operation condition of a heating device that heats the rail.

In the snow remover described above, when the determination unit determines that movement of the track junction is in a state interfered with by snow, the determination unit may further determine a level of interference with the track junction. Preferably, the ejector is operated in an operation mode changed by the controller in accordance with the level of interference determined by the determination unit.

With the above configuration, the operation mode of the ejector is changed in accordance with the level of interference with the track junction. Thus, unnecessary operation of the ejector is reduced as compared to when the ejector is operated based on only whether or not movement of the track junction is in an interfered state.

The snow remover described above may further include a heating device that heats a rail included in the track junction. Preferably, the controller further controls the heating device.

With the above configuration, the control of the ejector and the control of the heating device are combined and performed based on the condition of the track junction. Thus, the fluid ejection and the heating of the rails are effectively performed.

The snow remover according to the present invention succeeds in effectively ejecting a fluid.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram showing a snow remover of a first embodiment;
Fig. 2 is a schematic diagram showing a track junction on which the snow remover of the first embodiment is installed;
Fig. 3 is a table showing operation modes of the snow remover of the first embodiment;
Fig. 4 is a flowchart showing a snow removal process performed by the snow remover of the first embodiment;
Fig. 5 is a flowchart showing a non-switching process performed by the snow remover of the first embodiment; and
Fig. 6 is a schematic block diagram showing a snow remover of a second embodiment.

### First Embodiment

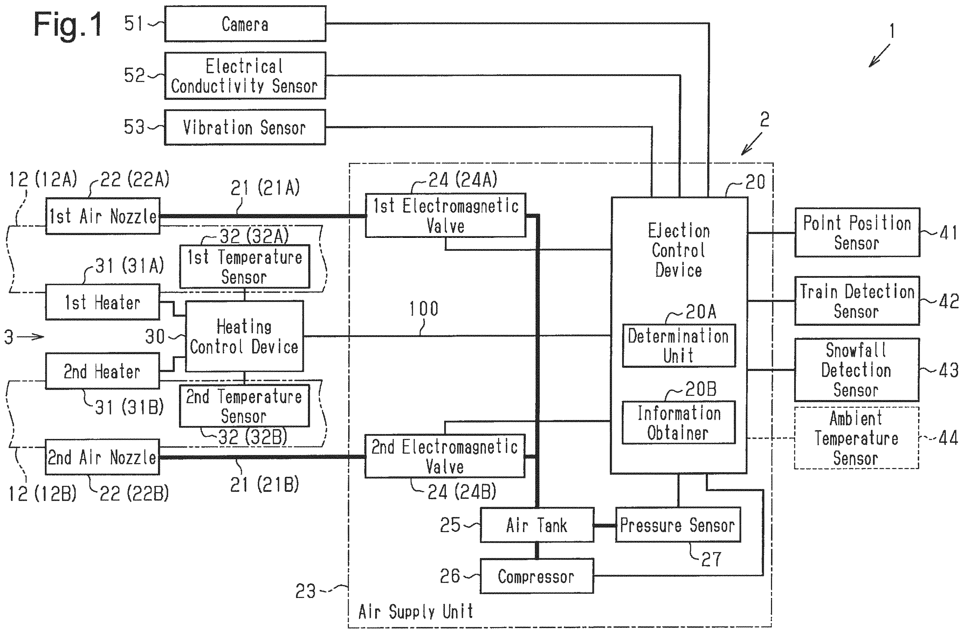

A snow remover of a first embodiment will now be described with reference to Figs. 1 to 5.

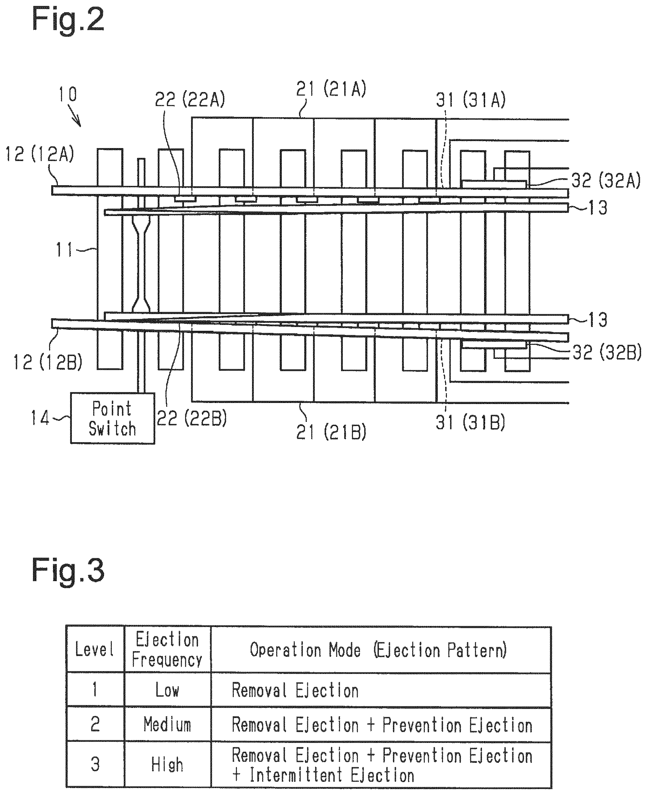

In a snowy region, as shown in Fig. 1, a snow removal system 1, which corresponds to a snow remover, is installed on a track junction 10 (refer to Fig. 2). The snow removal system 1 includes an ejection device 2 that ejects a fluid to remove snow from the track junction 10 and a heating device 3 that heats rails of the track junction 10. In this description, snow includes, in addition to snow, ice formed from snow that has melted and frozen. The ejection device 2 corresponds to an ejector.

As shown in Fig. 2, the track junction 10 has the functions of dividing a track into tracks and switching between the tracks. The track junction 10 includes two stock rails 12 fixed to railway sleepers 11, two tongue rails 13 moved relative to the stock rails 12, and a point switch 14 that moves the tongue rails 13. When the point switch 14 moves the tongue rails 13, the track junction 10 switches the track. The point switch 14 is of an electric type and moves the tongue rails 13 with a motor. In the track junction 10, when a train travels on the track junction 10 shifting between the stock rails 12 and the tongue rails 13, vibration is generated and causes snow to fall from under a floor of the train. The snow collected under the floor of the train includes hard snow. When an object such as snow is present between the stock rails 12 and the tongue rails 13, the track junction 10 may not be able to switch the track. This is referred to as a non-switching.

The ejection device 2 is pneumatic and ejects compressed air as a fluid to blow snow away from between the stock rails 12 and the tongue rails 13 of the track junction 10. The ejection device 2 includes pipes 21 arranged on a side surface of each stock rail 12 and an air nozzle 22 arranged on the distal end of each pipe 21. The air nozzle 22 has an opening arranged between the stock rail 12 and the tongue rail 13 when the stock rail 12 is in close contact with the tongue rail 13. The opening of the air nozzles 22 is directed toward the distal end of the tongue rail 13 to blow snow toward the distal end of the tongue rail 13. A plurality of sets of the pipes 21 and the air nozzles 22 is arranged on the stock rails 12.

The heating device 3 includes heaters 31 of an electric heating type. The heaters 31 are arranged on a side surface of each stock rail 12 and heat the stock rails 12 to melt snow and ice. The tongue rails 13 may be heated in addition to or instead of the stock rails 12. Additionally, a panel heater may be arranged between the railway sleepers 11 to heat the stock rails 12 and/or the tongue rails 13. The heaters 31 are not limited to the electric heating type and may be of a gas type.

As shown in Fig. 1, in the ejection device 2, the two stock rails 12 include a normal side stock rail 12A and a reverse side stock rail 12B. A first pipe 21A is arranged on a side surface of the normal side stock rail 12A, and a second pipe 21B is arranged on a side surface of the reverse side stock rail 12B. A first air nozzle 22A is arranged on the distal end of the first pipe 21A. A first electromagnetic valve 24A is arranged on the first pipe 21A to control ejection of air from the first air nozzle 22A. A second air nozzle 22B is arranged on the distal end of the second pipe 21B. A second electromagnetic valve 24B is arranged on the second pipe 21B to control ejection of air from the second air nozzle 22B. The first electromagnetic valve 24A and the second electromagnetic valve 24B are connected to an air tank 25 that stores compressed air. The air tank 25 is connected to a pipe that is divided and connected to the first electromagnetic valve 24A and the second electromagnetic valve 24B. The air tank 25 includes a pressure sensor 27 that detects the pressure of the air tank 25. When the pressure of the air tank 25 is less than or equal to a threshold value, a compressor 26 operates and supplies compressed air to the air tank 25. More specifically, the compressed air is supplied from the compressor 26 and stored in the air tank 25. The air is ejected from the first air nozzle 22A and the second air nozzle 22B in accordance with activation and deactivation of the first electromagnetic valve 24A and the second electromagnetic valve 24B connected to the air tank 25. The ejection device 2 is configured to change the ejection pressure, the ejection frequency, and the ejection time.

The ejection device 2 includes an ejection control device 20 that controls the air ejection performed by the ejection device 2. The ejection control device 20 includes a programmable logic controller (PLC), or a sequence control device, and operates in accordance with a dedicated program called a ladder program. The PLC includes a central processing unit (CPU) and a memory. The ejection control device 20 is connected to input devices such as the pressure sensor 27, a point position sensor 41, a train detection sensor 42, and a snowfall detection sensor 43. The ejection control device 20 is also connected to output devices such as the first electromagnetic valve 24A, the second electromagnetic valve 24B, and the compressor 26. The ejection control device 20 controls the output devices as controlled devices through the ladder program. The ejection control device 20 controls the ejection pressure, the ejection frequency, and the ejection time of air ejected from the ejection device 2 by controlling activation and deactivation of the first electromagnetic valve 24A and the second electromagnetic valve 24B. The ejection control device 20 corresponds to a controller.

The heating device 3 includes a first heater 31A installed on the side surface of the normal side stock rail 12A of the two stock rails 12 in the extension direction thereof and a second heater 31B installed on the side surface of the reverse side stock rail 12B in the extension direction thereof. The heating device 3 further includes a first temperature sensor 32A arranged on the normal side stock rail 12A to detect the temperature of the normal side stock rail 12A and a second temperature sensor 32B arranged on the reverse side stock rail 12B to detect the temperature of the reverse side stock rail 12B. The first temperature sensor 32A and the second temperature sensor 32B output temperature signals including the detected temperature information. As long as the first temperature sensor 32A and the second temperature sensor 32B are components of the snow removal system 1, the first temperature sensor 32A and the second temperature sensor 32B do not have to be components of the heating device 3 and may be components of the ejection device 2. The ejection control device 20 includes an information obtainer 20B that receives temperature signals from the first temperature sensor 32A and the second temperature sensor 32B to obtain the temperature information.

The heating device 3 includes a heating control device 30 that controls heating performed by the heating device 3. The heating control device 30 includes a programmable logic controller (PLC), or a sequence control device, and operates in accordance with a dedicated program called a ladder program. The PLC includes a CPU and a memory. The heating control device 30 is connected to input devices such as the first temperature sensor 32A and the second temperature sensor 32B. The heating control device 30 is also connected to output devices such as the first heater 31A and the second heater 31B. The heating control device 30 controls the output devices as controlled devices through the ladder program. The heating control device 30 controls the heating performed by the heating device 3 by controlling activation and deactivation of the first heater 31A and the second heater 31B.

The point position sensor 41 detects positions of the tongue rails 13 between the normal and reverse side stock rails 12 based on a current value of the motor of the point switch 14 and outputs a position signal including the detected position information. The ejection control device 20 determines whether or not the track is switched based on the position signal received from the point position sensor 41. For example, when snow or ice is present between the stock rails 12 and the tongue rails 13 and the tongue rails 13 cannot move, the point position sensor 41 outputs a signal including position information indicating so. When non-switching occurs in the track junction 10, the switching of the track is retried or a switching signal including non-switching information is transmitted to, for example, an operation command site.

The train detection sensor 42 includes, for example, an ultrasonic sensor and outputs a train passing detection signal when detecting that a train passes.

The snowfall detection sensor 43 is arranged on or around the track junction 10 and detects an amount of snowfall based on an amount of moisture of snow collected on a detection portion and outputs a snowfall signal including the detected snowfall amount. The snowfall detection sensor 43 is not limited to a moisture detection type and may be of an infrared ray type that detects the amount of snowfall by detecting an infrared ray reflected by snow. The information obtainer 20B receives the snowfall signal from the snowfall detection sensor 43 and obtains information of the amount of snowfall. The information obtainer 20B may obtain the amount of snow accumulation on or around the track junction 10 in addition to the amount of snowfall on or around the track junction 10. The amount of snowfall is an amount of snow that falls in a predetermined period of time and indicates how much it is currently snowing. The amount of snow accumulation is an amount of accumulated snow and indicates how much snow is currently accumulated.

As shown in Fig. 3, the ejection control device 20 performs "removal ejection", "prevention ejection", and "intermittent ejection" with the ejection device 2. The removal ejection refers to an air ejection performed by the ejection device 2 to remove snow and ice from the track junction 10 when the track junction 10 is in a non-switching state. When the track junction 10 is in the non-switching state and the switching of the track is retried, retrying ejection is performed in which air is ejected whenever the retrying is performed. The prevention ejection refers to an air ejection performed by the ejection device 2 whenever a train passes to prevent occurrence of the non-switching caused by snow falling from the traveling train on the track junction 10. The intermittent ejection refers to an air ejection performed by the ejection device 2 at a fixed time interval during snowfall to avoid snow accumulation.

The ejection control device 20 sets an operation mode of the ejection device 2 in accordance with the temperature of the rail and snowfall information. More specifically, one operation mode is selected from a plurality of operation modes (ejection patterns) including appropriate combinations of "the removal ejection", "the prevention ejection", and "the intermittent ejection" and executed. In the operation mode of a first level, the ejection control device 20 performs only the removal ejection so that the frequency of air ejection performed by the ejection device 2 is decreased. When the temperature of the stock rails 12 is relatively high and there is no snowfall, the ejection control device 20 sets the operation mode of the first level. In the operation mode of a second level, the ejection control device 20 performs the removal ejection and the prevention ejection so that the frequency of air ejection performed by the ejection device 2 is a medium level. When the temperature of the stock rails 12 is relatively low or there is snowfall, the ejection control device 20 sets the operation mode of the second level. In the operation mode of a third level, the ejection control device 20 performs the removal ejection, the prevention ejection, and the intermittent ejection so that the frequency of air ejection performed by the ejection device 2 is increased. When the temperature of the stock rails 12 is relatively low and there is snowfall, the ejection control device 20 sets the operation mode of the third level. The air ejection pattern in the operation mode of each level may be changed in any manner, for example, in accordance with the installation environment of the snow removal system 1 and the train condition.

As shown in Fig. 2, the ejection control device 20 does not simultaneously eject air from the first air nozzle 22A and the second air nozzle 22B but ejects air from one of the first air nozzle 22A and the second air nozzle 22B. The ejection control device 20 performs activation control to open the first electromagnetic valve 24A or the second electromagnetic valve 24B so that the compressed air is supplied to the pipes 21 located on the side surface of each stock rail 12 located further from the tongue rail 13. As described above, when air is ejected from only one of the first air nozzle 22A and the second air nozzle 22B, a necessary air pressure or a necessary amount of air is reduced. If the first air nozzle 22A and the second air nozzle 22B simultaneously need to eject air, the air pressure of the air tank 25 or the amount of air in the air tank 25 may be set to the necessary pressure or the necessary amount. When the pressure value of the air tank 25 obtained from the pressure sensor 27 is less than or equal to a threshold value, the ejection control device 20 operates the compressor 26 to supply compressed air to the air tank 25.

As shown in Fig. 1, in components of the ejection device 2, the first electromagnetic valve 24A, the second electromagnetic valve 24B, the air tank 25, the compressor 26, the pressure sensor 27, and the ejection control device 20 configure an air supply unit 23. When connected to a device arranged on the track junction 10, the air supply unit 23 serves as the ejection device 2. Examples of devices arranged on the track junction 10 include the first pipe 21A, the first air nozzle 22A, the second pipe 21B, the second air nozzle 22B, the point position sensor 41, the train detection sensor 42, and the snowfall detection sensor 43. Further, when connected to the heating control device 30 connected to the components of the heating device 3, namely the first heater 31A, the second heater 31B, the first temperature sensor 32A, and the second temperature sensor 32B, the air supply unit 23 serves as the heating device 3 in addition to the ejection device 2. The ejection control device 20 of the air supply unit 23 may control the ejection device 2 and the heating device 3.

The ejection control device 20 and the heating control device 30 are connected to perform communication with each other by a connection line 100, which corresponds to a communication portion. The information obtainer 20B of the ejection control device 20 obtains the temperature of the rails from the heating control device 30 through the connection line 100. The heating control device 30 obtains snowfall information and non-switching information from the ejection control device 20 through the connection line 100. The ejection control device 20 and the heating control device 30 may each include a communication portion allowing wireless communication instead of using the connection line 100.

The ejection control device 20 controls the heating device 3. More specifically, the ejection control device 20 gives an instruction to the heating control device 30 of the heating device 3 to control the heating device 3 via the heating control device 30.

The ejection control device 20 controls the ejection device 2 and the heating device 3 based on the temperature of the rails of the track junction 10 and the snowfall information. More specifically, when the temperature of the stock rails 12 is relatively high and is, for example, greater than or equal to 5°C and there is snowfall, the snow may easily melt. When the temperature of the stock rails 12 is relatively low and is, for example, less than 5°C and there is snowfall, the snow may not melt and may accumulate. Thus, the ejection control device 20 controls the ejection device 2 and the heating device 3 based on the temperature of the stock rails 12 so that the snow removal system 1 effectively operates while limiting occurrence of the non-switching of the track junction 10.

The ejection control device 20 controls the operation of the ejection device 2 based on the amount of snowfall on the track junction 10. The ejection control device 20 includes a determination unit 20A determining whether or not movement of the track junction 10 is in a state interfered with by snow present in the track junction 10. When the determination unit 20A determines that movement of the track junction 10 is in the state interfered with by snow, the ejection control device 20 operates the ejection device 2.

The ejection control device 20 is connected to a camera 51 that captures an image of the track junction 10, an electrical conductivity sensor 52 that detects the electrical conductivity of the stock rails 12 of the track junction 10, and a vibration sensor 53 that detects vibration of the stock rails 12 of the track junction 10. The camera 51 sends image information, which is obtained by capturing an image of the track junction 10, to the ejection control device 20. The electrical conductivity sensor 52 sends measurement information, which is obtained by measuring the electrical conductivity of the rails of the track junction 10, to the ejection control device 20. The vibration sensor 53 sends measurement information, which is obtained by measuring vibration of the stock rails 12 of the track junction 10, to the ejection control device 20. Only at least one of the camera 51, the electrical conductivity sensor 52, and the vibration sensor 53 may be connected to the ejection control device 20. That is, at least one of the camera 51, the electrical conductivity sensor 52, and the vibration sensor 53 may be omitted.

The ejection control device 20 recognizes the condition of the track junction 10 based on information received from at least one of the camera 51, the electrical conductivity sensor 52, the vibration sensor 53, and the heating control device 30. When snow is present in the track junction 10, the electrical conductivity and vibration of the rails vary. The determination unit 20A determines whether or not snow is present in the track junction 10 based on at least one of a captured image of the track junction 10, vibration of the stock rails 12 of the track junction 10, the electrical conductivity of the stock rails 12 of the track junction 10, and an operation condition of the heating device 3.

The determination unit 20A also determines whether or not movement of the track junction 10 is in a state interfered with by snow based on at least one of a captured image of the track junction 10, vibration of the stock rails 12 of the track junction 10, the electrical conductivity of the stock rails 12 of the track junction 10, and an operation condition of the heating device 3. When the determination unit 20A determines that movement of the track junction 10 is in the state interfered with by snow, the determination unit 20A further determines the level of interference with the track junction 10, for example, whether it takes a long time for recovery due to interference of a large amount of snow or it takes a short time for recovery due to interference of a small amount of snow. The ejection control device 20 changes the operation mode of the ejection device 2 in accordance with the level of interference determined by the determination unit 20A.

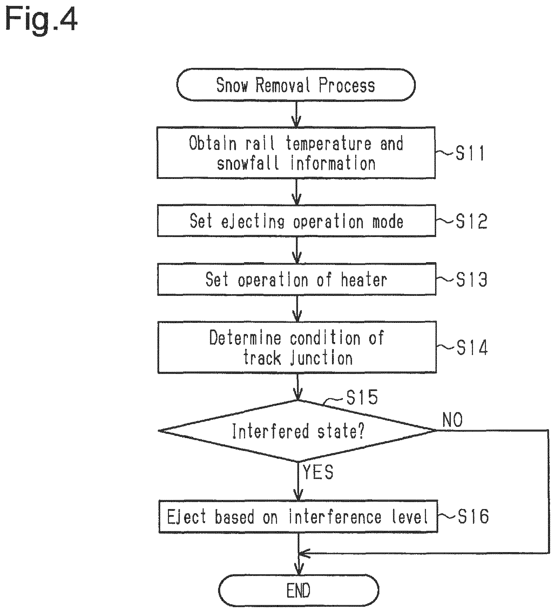

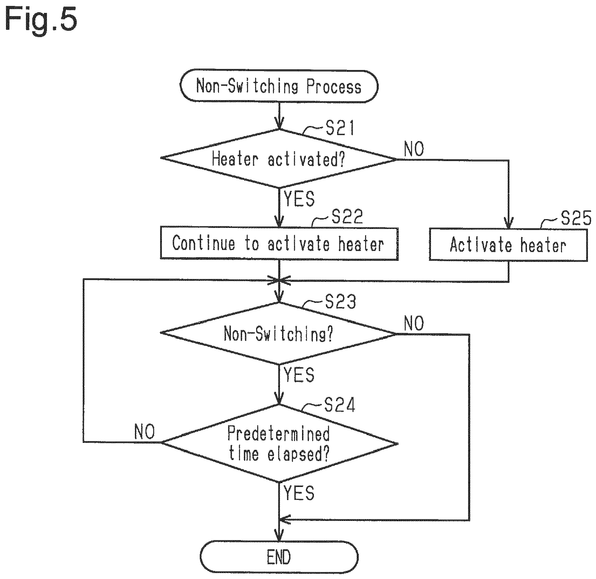

The operation of the snow removal system 1 that is configured as described above will now be described with reference to Figs. 4 and 5.

As shown in Fig. 4, the ejection control device 20 performs a snow removal process described below.

The information obtainer 20B of the ejection control device 20 obtains the temperature of the rails of the track junction 10 and the snowfall information (step S11). More specifically, the information obtainer 20B of the ejection control device 20 obtains the temperature of the normal side stock rail 12A from a temperature signal output from the first temperature sensor 32A and the temperature of the reverse side stock rail 12B from a temperature signal output from the second temperature sensor 32B. The information obtainer 20B of the ejection control device 20 also obtains the snowfall information from a snowfall signal output from the snowfall detection sensor 43.

Subsequently, the ejection control device 20 sets the ejecting operation mode (step S12). More specifically, the ejection control device 20 selects one from the operation modes of the ejection device 2 based on the obtained temperature of the stock rails 12 and the obtained snowfall information. More specifically, when the temperature of the stock rails 12 is, for example, greater than or equal to 5°C and there is no snowfall, the ejection control device 20 sets the operation mode of the first level. In the operation mode of the first level, the ejection control device 20 performs only the removal ejection. When the temperature of the stock rails 12 is less than 5°C or there is snowfall, the ejection control device 20 sets the operation mode of the second level. In the operation mode of the second level, the ejection control device 20 performs the removal ejection and the prevention ejection. When the temperature of the stock rails 12 is less than 5°C and there is snowfall, the ejection control device 20 sets the operation mode of the third level. In the operation mode of the third level, the ejection control device 20 performs the removal ejection, the prevention ejection, and the intermittent ejection.

Subsequently, the ejection control device 20 sets the operation of the heaters (step S13). More specifically, the ejection control device 20 causes the heating control device 30 to set the operation of the first heater 31A and the second heater 31B taking into consideration the operation condition of the ejection device 2. Thus, the heaters 31 are operated at lower temperatures than those operated in a typical manner. For example, in a typical configuration in which an ejection device and a heating device are separately operated, activation control is performed on heaters of the heating device at less than 5°C, and deactivation control is performed on the heaters at 15°C or greater. In the present embodiment, activation control may be set to be performed on the first heater 31A and the second heater 31B of the heating device 3 of the snow removal system 1 at less than 3°C, and deactivation control may be set to be performed at 10°C or greater. This is because the heating device 3 heats the stock rails 12 so that snow and ice are easy to separate and blown away by air of the ejection device 2. This eliminates the need for entirely melting snow and ice present in the track junction 10.

Subsequently, the ejection control device 20 determines the condition of the track junction 10 (step S14). More specifically, the determination unit 20A determines whether or not movement of the track junction 10 is in a state interfered with by snow based on at least one of a captured image of the track junction 10, vibration of the rails of the track junction 10, the electrical conductivity of the rails of the track junction 10, and the operation condition of the heating device 3.

When the determination unit 20A determines that movement of the track junction 10 is not in a state interfered with by snow (step S15: NO), the ejection control device 20 causes the ejection device 2 to eject air in the operation mode that is set in step S12 and causes the heating device 3 to operate the heaters 31 in the operation mode that is set in step S13.

When the determination unit 20A determines that movement of the track junction 10 is in a state interfered with by snow (step S15: YES), the ejection control device 20 causes the ejection device 2 to eject air in accordance with the level of interference with the track junction 10 (step S16). For example, when the determination unit 20A determines that a large amount of snow interferes with the track junction 10, the ejection control device 20 causes the ejection device 2 to eject air for a first predetermined amount of time, at a first predetermined frequency, or at a first predetermined pressure regardless of the operation mode. When the determination unit 20A determines that a small amount of snow interferes with the track junction 10, the ejection control device 20 causes the ejection device 2 to eject air for a second predetermined amount of time that is less than the first predetermined amount of time, a second predetermined frequency that is less than the first predetermined frequency, or at a second predetermined pressure that is less than the first predetermined pressure regardless of the operation mode.

As shown in Fig. 5, when the non-switching occurs in the track junction 10, the ejection control device 20 performs a non-switching process in the snow removal process. When the non-switching occurs, the ejection control device 20 causes the ejection device 2 to perform the removal ejection whenever the point switch 14 operates to switch the track. Occurrence of non-switching may be determined together with the determination of the condition of the track junction 10 performed in step S14, that is, the determination of whether or not movement of the track junction 10 is in a state interfered with by snow. Then, the following process may be performed.

The ejection control device 20 determines whether or not the heaters are activated (step S21). More specifically, when occurrence of non-switching is caused by the presence of snow or ice on the track junction 10, the non-switching may be eliminated by heating the stock rails 12. Thus, the ejection control device 20 determines whether or not activation control is performed on the first heater 31A and the second heater 31B. When the ejection control device 20 determines that deactivation control is performed on the first heater 31A and the second heater 31B (step S21: NO), the heaters are activated (step S25). More specifically, the ejection control device 20 forcibly performs activation control on the first heater 31A and the second heater 31B to heat the stock rails 12 regardless of the operation mode of the ejection device 2.

When the ejection control device 20 determines that activation control is performed on the first heater 31A and the second heater 31B (step S21: YES), the ejection control device 20 continues to perform the activation control on the first heater 31A and the second heater 31B (step S22).

Subsequently, the ejection control device 20 determines whether or not the track junction 10 is in the non-switching state (step S23). More specifically, the ejection control device 20 determines whether or not the non-switching state is eliminated from the track junction 10. When the ejection control device 20 determines that the track junction 10 is not in the non-switching state (step S23: NO), the non-switching is eliminated. Thus, the non-switching process is ended.

When the ejection control device 20 determines that the track junction 10 is in the non-switching state (step S23: YES), the non-switching is not eliminated. Thus, the ejection control device 20 determines whether or not a predetermined amount of time has elapsed from when the non-switching process was started (step S24). A certain amount of time is needed to warm the stock rails 12 with the first heater 31A and the second heater 31B. Thus, when the ejection control device 20 determines that the predetermined amount of time has not elapsed (step S24: NO), the ejection control device 20 proceeds to step S23 to wait until the predetermined amount of time elapses.

When the ejection control device 20 determines that the predetermined amount of time has elapsed (step S24: YES), the non-switching cannot be eliminated by the heating of the stock rails 12 for the predetermined amount of time. Thus, the non-switching process is ended. The ejection control device 20 informs, for example, the operation command site that the non-switching cannot be eliminated.

As described above, the ejection control device 20 controls the operation of the ejection device 2 based on the condition of the track junction 10. Thus, an object such as snow may be removed before the non-switching occurs in the track junction 10, and the ejection device 2 is effectively operated.

As described above, the present embodiment has the advantages described below.
(1) The ejection device 2 is controlled based on the condition of the track junction 10. Thus, the ejection device 2 is effectively operated.
(2) When it is determined that movement of the track junction 10 is in a state interfered with by snow, the ejection device 2 is operated. Thus, unnecessary operation of the ejection device 2 is reduced.
(3) The operation mode of the ejection device 2 is changed in accordance with the level of interference with the track junction 10. Thus, unnecessary operation of the ejection device 2 is reduced as compared to when the ejection device 2 is operated based on only whether or not movement of the track junction 10 is in the interfered state.
(4) The control of the ejection device 2 and the control of the heating device 3 are combined and performed based on the condition of the track junction 10. Thus, the snow removal system 1 is effectively operated.

### Second Embodiment

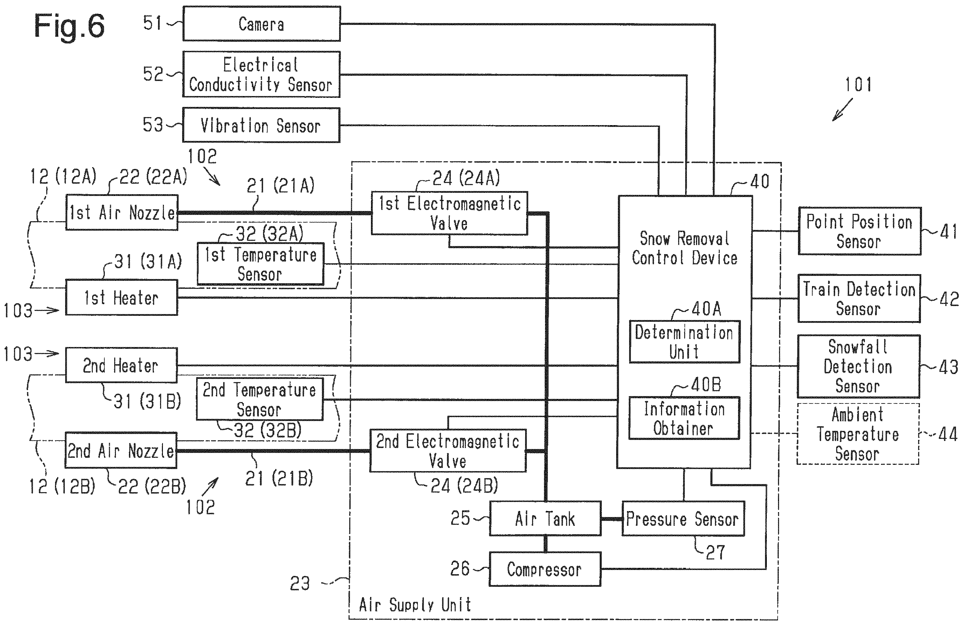

A snow remover of a second embodiment will now be described with reference to Fig. 6. The snow remover of the second embodiment differs from that of the first embodiment in that the snow remover includes a control device that controls both an ejection device and a heating device. The description hereafter will focus on the differences from the first embodiment.

As shown in Fig. 6, the snow removal system 101 includes an ejection device 102, a heating device 103, and a snow removal control device 40 that controls both the ejection device 102 and the heating device 103. The heating device 103 does not include a control device and is controlled by the snow removal control device 40. The snow removal control device 40 performs control in the same manner as the ejection control device 20 of the first embodiment and directly controls the heaters 31. The snow removal control device 40 performs activation and deactivation control on the first electromagnetic valve 24A and the second electromagnetic valve 24B of the ejection device 102 to control the air ejection performed by the ejection device 102. The snow removal control device 40 performs activation and deactivation control on the first heater 31A and the second heater 31B of the heating device 103 to control the heating performed by the heating device 103. The snow removal control device 40 corresponds to a controller.

The snow removal control device 40 includes a programmable logic controller (PLC), or a sequence control device, and operates in accordance with a dedicated program called a ladder program. The PLC includes a CPU and a memory. The snow removal control device 40 is connected to input devices such as the pressure sensor 27, the first temperature sensor 32A, the second temperature sensor 32B, the point position sensor 41, the train detection sensor 42, and the snowfall detection sensor 43. The snow removal control device 40 is also connected to output devices such as the first electromagnetic valve 24A, the second electromagnetic valve 24B, the compressor 26, the first heater 31A, and the second heater 31B. The snow removal control device 40 controls the output devices as controlled devices through the ladder program.

The snow removal control device 40 controls the operation of the ejection device 2 based on information of an amount of snow accumulation on the track junction 10. The snow removal control device 40 includes a determination unit 40A that determines whether or not movement of the track junction 10 is in a state interfered with by snow present in the track junction 10. When the determination unit 40A determines that movement of the track junction 10 is in the state interfered with by snow, the snow removal control device 40 operates the ejection device 102. The snow removal control device 40 includes an information obtainer 40B that obtains various kinds of information.

The snow removal control device 40 is connected to the camera 51 that captures an image of the track junction 10, the electrical conductivity sensor 52 that detects the electrical conductivity of the stock rails 12 of the track junction 10, and the vibration sensor 53 that detects vibration of the stock rails 12 of the track junction 10. Only at least one of the camera 51, the electrical conductivity sensor 52, and the vibration sensor 53 may be connected to the snow removal control device 40. That is, at least one of the camera 51, the electrical conductivity sensor 52, and the vibration sensor 53 may be omitted.

The snow removal control device 40 recognizes the condition of the track junction 10 based on information from at least one of the camera 51, the electrical conductivity sensor 52, the vibration sensor 53, and the heating control device 30. When snow is present in the track junction 10, the electrical conductivity and vibration properties of the rails vary. The determination unit 40A determines whether or not snow is present in the track junction 10 based on at least one of a captured image of the track junction 10, vibration of the stock rails 12 of the track junction 10, the electrical conductivity of the stock rails 12 of the track junction 10, and the operation condition of the heating device 3.

The determination unit 40A also determines whether or not movement of the track junction 10 is in a state interfered with by snow based on at least one of a captured image of the track junction 10, vibration of the stock rails 12 of the track junction 10, the electrical conductivity of the stock rails 12 of the track junction 10, and the operation condition of the heating device 3. When the determination unit 40A determines that movement of the track junction 1 0 is in the state interfered with by snow, the determination unit 40A further determines the level of interference with the track junction 10, for example, whether it takes a long time for recovery due to interference of a large amount of snow or it takes a short time for recovery due to interference of a small amount of snow. The snow removal control device 40 changes the operation mode of the ejection device 2 in accordance with the level of interference determined by the determination unit 40A.

As described above, the present embodiment has the advantages described below in addition to advantages (1) to (4) of the first embodiment.
(5) The snow removal control device 40, which corresponds to a control device of the ejection device 102, directly controls the heaters 31. This eliminates the need for a control device of the heating device 103 and simplifies the configuration.

The embodiments may be modified as follows.

In the snow removal process of each embodiment, the step of setting the ejecting operation mode (step S12) and the step of setting the operation of the heaters 31 (step S13) may be switched in order or may be simultaneously executed.

In the snow removal process of each embodiment, the ejecting operation mode and the operation of the heaters 31 (step S11 to S13) are set based on the temperature of the rails and the information of a snowfall amount. Instead, the ejecting operation mode and the operation of the heaters may be set based on determination of the condition of the track junction 10 (step S14).

In each embodiment, the information obtainer 20B may obtain information of an amount of snow accumulation. At least one of the ejection pressure, the ejection frequency, and the ejection time of air ejected from the ejection devices 2 and 102 may be controlled based on at least one of the information of a snowfall amount and the information of a snow accumulation amount.

In each embodiment, the snowfall detection sensor 43 may be omitted when the presence of snow in the track junction 10, the amount of snowfall, and the amount of snow accumulation are determined based on information from at least one of the camera 51, the electrical conductivity sensor 52, the vibration sensor 53, and the heating control device 30,.

In the snow removal process of each embodiment, the step of causing the ejection device 2 to eject air in accordance with the level of interference with the track junction 10 (step S16) may be changed to a step of causing the ejection device 2 to eject air regardless of the interference level.

In the first embodiment, the ejection control device 20 controls the heating device 3. However, the ejection control device 20 does not necessarily have to control the heating device 3. More specifically, the heating control device 30 may control the heating device 3 based on the temperature of the rails.

In each embodiment, control is performed based on the temperature of the stock rails 12. Instead, control may be performed based on the temperature of the tongue rails 13. Further, control may be performed based on both the temperature of the stock rails 12 and the temperature of the tongue rails 13. For example, the temperature of the stock rails 12 may be compared with the temperature of the tongue rails 13, and control may be performed based on the lower one of the temperatures.

In each embodiment, the operation mode is set based on the temperature of the rails of the track junction 10 and the information of a snowfall amount. Instead, the operation mode may be set based on only the information of a snowfall amount. For example, the ejection control device 20 sets the operation mode of the first level when the amount of snowfall is 0 cm/hour, the operation mode of the second level when the amount of snowfall is less than 3 cm/hour, and the operation mode of the third level when the amount of snowfall is greater than or equal to 3 cm/hour.

In each of the configurations described above, as shown in Figs. 1 and 6, the snow removal systems 1 and 101 may include an ambient temperature sensor 44 that detects the ambient temperature around the track junction 10 and outputs an ambient temperature signal including ambient temperature information. The snow removal control device 40 and the heating control device 30 may perform activation and deactivation control on the first heater 31A and the second heater 31 B based on the ambient temperature instead of the temperature of the rails. In this configuration, when snow is present in the track junction 10, the snow is quickly removed by operating at least one of the ejection devices 2 and 102 and the heating devices 3 and 103.

In the embodiments, the ejection devices 2 and 102 are controlled in accordance with information related to at least one of the amount of snow accumulation and the amount of snowfall around the track junction 10 on which the ejection devices 2 and 102 are arranged. Instead, the ejection devices 2 and 102 may be controlled in accordance with external information. The external information may be, for example, information related to at least one of the amount of snowfall and the amount of snow accumulation in the region where the track junction 10 is installed or information related to at least one of the amount of snow accumulation and the amount of snowfall around another track junction installed ahead or behind on the same track.

In the first embodiment, the ejection control device 20 and the heating control device 30 are PLCs. However, the ejection control device 20 and the heating control device 30 are not limited to PLCs and may be devices that control controlled devices without using the ladder program.

In the second embodiment, the snow removal control device 40 is a PLC. However, the snow removal control device 40 is not limited to a PLC and may be a device that controls controlled devices without using the ladder program.

In the embodiments, the ejection devices 2 and 102 remove snow by simply blowing snow away with ejected air. A heating means may be provided to heat air before the ejection so that hot air is ejected. Alternatively, a pipe unit including the nozzle described above may be used as a heating device so that when the track junction 10 is in the non-switching state, heat is applied between the stock rails 12 and the tongue rails 13.

The fluid ejected by the ejection devices 2 and 102 is not limited to air and may be cold or hot water

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

The present examples and embodiments are to be considered as illustrative and not restrictive, and the invention is not to be limited to the details given herein, but may be modified within the scope and equivalence of the appended claims.

## Claims

1. A snow remover (1; 101) comprising:
an ejector (2; 102) that ejects a fluid to remove snow from a track junction (10);
an information obtainer (20B, 40B) that obtains information related to at least one of an amount of snow accumulation and an amount of snowfall around the track junction (10); and
a controller (20; 40) that controls at least one of an ejection pressure, an ejection frequency, and an ejection time of the fluid ejected from the ejector (2; 102) in accordance with information obtained by the information obtainer (20B; 40B).

2. The snow remover (1; 101) according to claim 1, wherein
the controller (20; 40) includes a determination unit (20A; 40A) that determines whether or not movement of the track junction (10) is in a state interfered with by snow present in the track junction (10), and
when the determination unit (20A; 40A) determines that movement of the track junction (10) is in a state interfered with by snow, the controller (20; 40) operates the ejector (2; 102).

3. The snow remover (1; 101) according to claim 2, wherein the determination unit (20A; 40A) determines whether or not movement of the track junction (10) is in a state interfered with by snow based on at least one of a captured image of the track junction (10), vibration of a rail (12) included in the track junction (10), an electrical conductivity of the rail (12), and an operation condition of a heating device (3; 103) that heats the rail (12).

4. The snow remover (1; 101) according to claim 2 or 3, wherein
when the determination unit (20A; 40A) determines that movement of the track junction (10) is in a state interfered with by snow, the determination unit (20A; 40A) further determines a level of interference with the track junction (10), and
the ejector (2; 102) is operated in an operation mode changed by the controller in accordance with the level of interference determined by the determination unit (20A; 40A).

5. The snow remover (1; 101) according to any one of claims 1 to 4, further comprising a heating device (3; 103) that heats a rail (12) included in the track junction (10), wherein the controller (20; 40) further controls the heating device (3; 103).
